# EUROPÄISCHE PATENTSCHRIFT

(11) **EP 2 468 432 B1**
(45) Veröffentlichungstag und Bekanntmachung des Hinweises auf die Patenterteilung: **25.07.2018**
(21) Anmeldenummer: 11008495.1
(22) Anmeldetag: 22.10.2011
(51) Int. Cl.: B21K 1/12, B21H 8/00, F16H 53/00

(54) **Verfahren zum Herstellen einer Schaltkulisse**
Method for manufacturing a shifting gate
Procédé de fabrication d'une coulisse d'accouplement

(30) Priorität: 23.12.2010 DE 102010061514
(43) Veröffentlichungstag der Anmeldung: 27.06.2012
(73) Patentinhaber: Dr. Ing. h.c. F. Porsche AG, 70435 Stuttgart (DE)
(72) Erfinder: Ickinger, Frank, 74385 Pleidelsheim (DE); Schultz, Willi, 75245 Neulingen (DE); Schwarzenthal, Dietmar, 71254 Ditzingen (DE)

(56) Entgegenhaltungen:
- EP-A2- 1 225 375
- JP-A- 55 080 130
- JP-A- 58 211 059
- JP-A- 60 026 857
- JP-A- 60 026 858
- JP-A- 60 130 436

## Beschreibung

Die vorliegende Erfindung bezieht sich auf ein Verfahren zum Herstellen einer Schaltkulisse.
Beispielsweise ist aus der Druckschrift EP 1 225 375 A2 ein Verfahren zum Herstellen einer Schaltkulisse bekannt. Bei dem bekannten Verfahren werden Nuten als Ausschnitte in einem Blechstreifen gebildet, welcher anschließend zu einer Hülse umgeformt wird, die die Schaltkulisse bildet. Diese Druckschrift offenbart in Paragraph [0003] auch ein Verfahren gemäß dem Oberbegriff des Anspruchs 1. Aufgabe der vorliegenden Erfindung ist es, zumindest eine Alternative zu dem aus dem Stand der Technik bekannten Ansatz bereitzustellen.
Diese Aufgabe wird gelöst durch ein Verfahren mit den Merkmalen des Patentanspruchs 1. Im Unteranspruch findet sich eine vorteilhafte Ausgestaltung der Erfindung.

Gemäß des erfindungsgemäßen Verfahrens wird der Blechzuschnitt mit wenigstens einer Tasche an der Seite gebildet, welche der Seite gegenüberliegt, die die Nut aufweist. Die Tasche bringt eine Gewichtseinsparung mit sich.
Gemäß einer weiteren Ausgestaltung des erfindungsgemäßen Verfahrens sind mehrere der Taschen vorgesehen, welche zu beiden Seiten der Nut angeordnet sind. Dadurch wird optimal in den Bereichen, die die Nut nicht aufweisen, das überschüssige Material des Blechzuschnitts oder des Blechzylinders entfernt, wodurch eine Gewichtseinsparung erzielt werden kann.

Die Erfindung wird im Folgenden anhand von Ausführungsbeispielen unter Bezugnahme auf die beiliegenden Figuren der Zeichnung näher erläutert.
Von den Figuren zeigen:
- Fig. 1: in einer perspektivischen Ansicht einen Ausschnitt aus einem Verbrennungsmotor;
- Fig. 2: eine vergrößerte Ansicht A aus Fig. 1; und
- Fig. 3-7: mehrere Zustände bei einem Verfahren gemäß einem Ausführungsbeispiel der vorliegenden Erfindung.
In den Figuren der Zeichnungen bezeichnen dieselben Bezugsziffern gleiche oder funktionsgleiche Komponenten, soweit nichts Gegenteiliges angegeben ist.

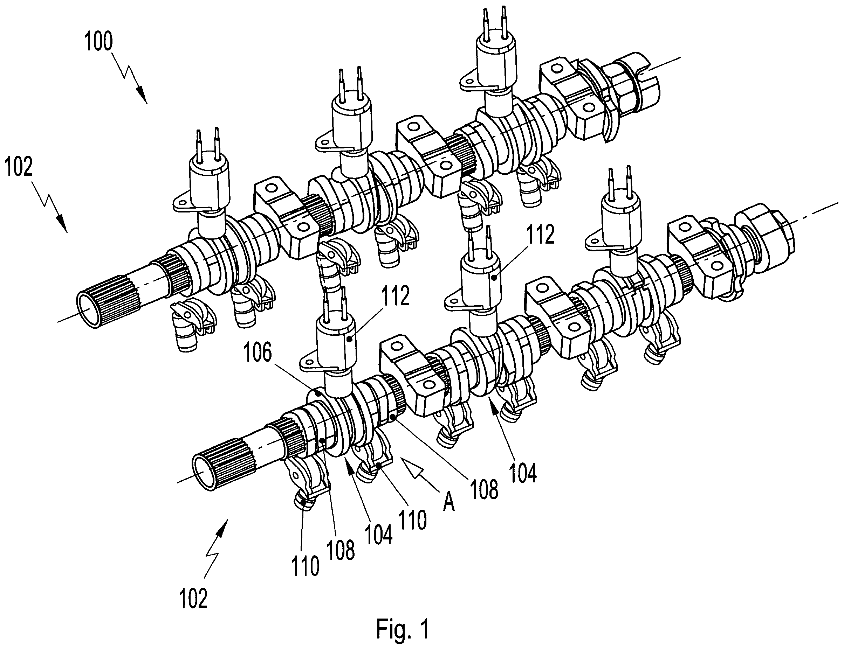

Fig. 1 zeigt einen Ausschnitt aus einem allgemein mit 100 bezeichneten Verbrennungsmotor. Der Verbrennungsmotor 100 weist zwei Nockenwellen 102 auf, die Einlass- bzw. Auslassventile (nicht dargestellt) betätigen. Nachfolgende Erläuterungen beziehen sich auf die vordere Nockenwelle 102 in Fig. 1, gelten aber entsprechend für die hintere Nockenwelle 102.
Die Nockenwelle 102 trägt mehrere Schiebenockenstücke 104. Ein jeweiliges Schiebenockenstück 104 umfasst eine Schaltkulisse 106 sowie vor und hinter der Schaltkulisse 106 angeordnete Nockenpakete 108. Die Nockenpakete 108 sind jeweils mit einem Schlepphebel 110 auf an noch späterer Stelle näher beschriebene Weise zum Betätigen der Ein- und Auslassventile in Wirkverbindung bringbar.
Außerdem weist der Verbrennungsmotor 100 Aktuatoren 112 mit nicht dargestellten Zapfen auf. Die Aktuatoren 112 sind dazu eingerichtet, die ihnen jeweils zugeordneten Schiebenockenstücke 104 entlang der Nockenwelle 102 zu verschieben. Auch dies wird an späterer Stelle noch näher erläutert.

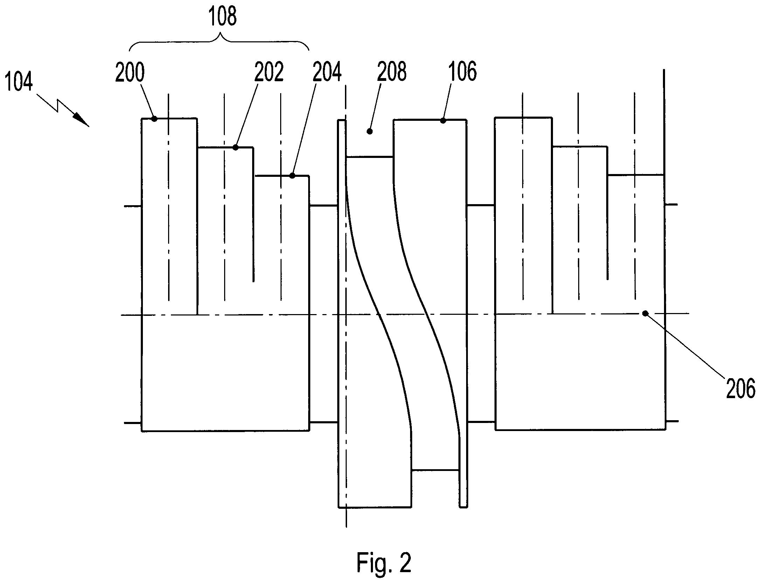

Fig. 2 zeigt eine vergrößerte Ansicht A aus Fig. 1. Dabei ist lediglich das Schiebenockenstück 104 dargestellt.

Wie nachfolgend anhand des in Fig. 2 links dargestellten Nockenpakets 108 beispielhaft erläutert, umfasst dieses drei Nocken 200, 202, 204. Die Nocken 200, 202, 204 sind unterschiedlich dimensioniert. Je nachdem welcher Nocken 200, 202, 204 den Schlepphebel 110 betätigt, ergibt sich eine unterschiedliche Ventilcharakteristik des betätigten Ein- bzw. Auslassventils.

Um nun das Schiebenockenstück 104 entlang der Nockenwelle 102 zu verschieben, welche in Fig. 2 lediglich durch ihre Mittelachse 206 angedeutet ist, greift der nicht dargestellte Zapfen des Aktuators 112 in eine Nut 208 in der Schaltkulisse 106 ein.

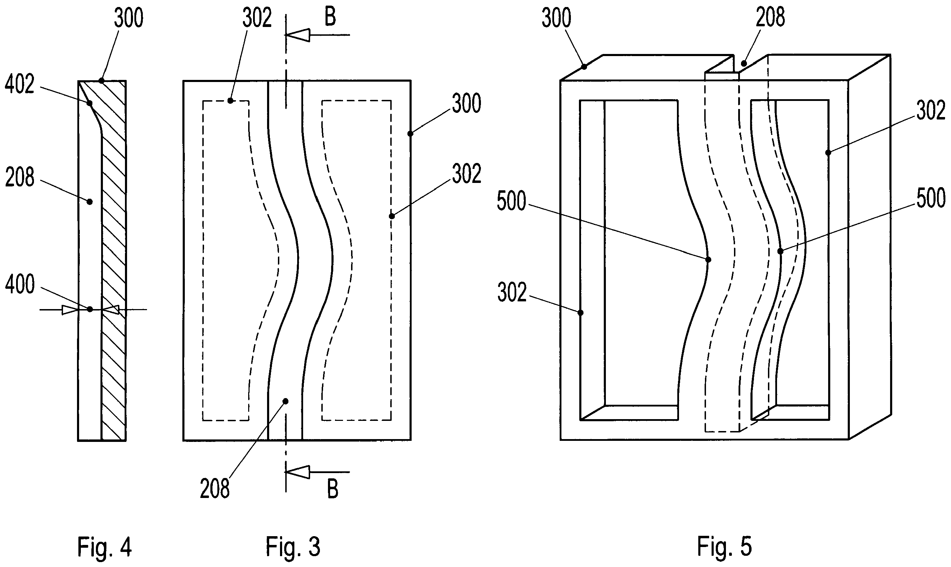

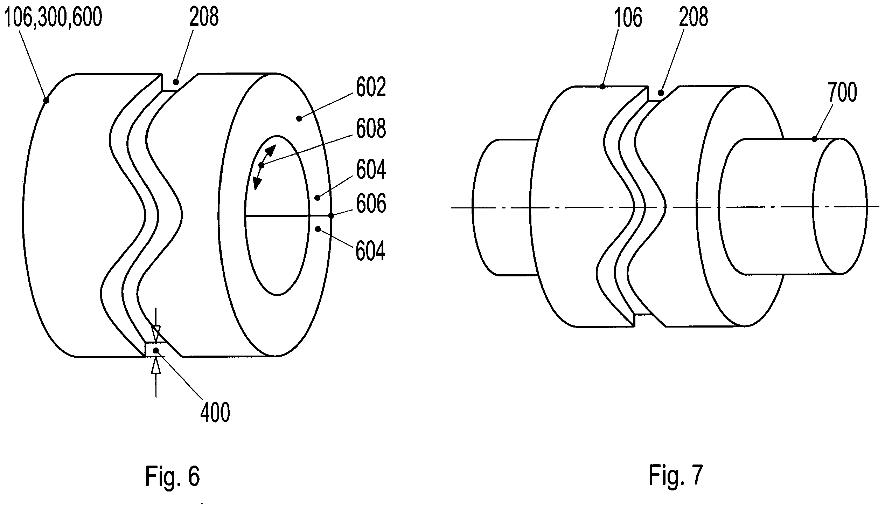

Nachfolgend wird anhand der Fig. 3-7 ein Verfahren zum Herstellen der Schaltkulisse 106 bzw. des Schiebenockenstücks 104 (Fig. 7) gemäß einem Ausführungsbeispiel der vorliegenden Erfindung erläutert.

Fig. 3 zeigt einen ebenen Blechzuschnitt 300. In den Blechzuschnitt 300 wird die Nut 208 beispielsweise mittels eines entsprechenden Stempels eingeprägt. Die Nut 208 weist beispielsweise eine S-Form oder eine Doppel-S-Form auf.

Anhand von Fig. 4, welche einen Schnitt B-B aus Fig. 3 zeigt, wird deutlich, dass die Nut 208 das Material des Blechzuschnitts 300 an keiner Stelle durchdringt. Weiterhin ist in Fig. 4 gezeigt, dass die Tiefe 400 der Nut 208 entlang der Nut variiert. Insbesondere kann die Nut 208 einen Auslauf 402 aufweisen, entlang dessen die Tiefe 400 der Nut 208 von einem maximalen Wert auf Null kontinuierlich abnimmt.

Nun zurückkehrend zu Fig. 3, ist der Blechzuschnitt 300 weiterhin mit gestrichelt dargestellten Taschen 302 auf der Seite des Blechzuschnitts 300 gegenüberliegend der Seite, welche die Nut 208 aufweist, gebildet. Die Taschen 302 sind in Fig. 3 verdeckt.
Fig. 5 zeigt perspektivisch den Blechzuschnitt 300 aus Fig. 3, wobei die Taschen 302 zu erkennen sind. Die Taschen 302 sind zu beiden Seiten der Nut 208 angeordnet und korrespondierend zu dieser ausgebildet. So ist beispielsweise jede der Taschen 302 mit einer Seitenfläche 500 gebildet, welche die S-Form der Nut 208 nachbildet. Somit wird das Gewicht des Blechzuschnitts 300 minimiert.
Hiernach wird der Blechzuschnitt 300, wie in der perspektivischen Ansicht aus Fig. 6 gezeigt, zu einem Zylinder 600 mit einem im Wesentlichen ringförmigen Querschnitt 602 umgeformt. Die sich dann gegenüberliegenden Enden 604 des Blechzuschnitts 300 werden mittels einer Schweißnaht 606 verbunden. Wie in der perspektivischen Ansicht aus Fig. 7 gezeigt, wird die so gebildete Schaltkulisse 106 mit einem Rohr 700 verbunden, auf welchem dann vor und hinter der Schaltkulisse 106 die Nockenpakete 108 befestigt werden.
Sobald der Zylinder 600 gebildet ist, wie in Fig. 6 gezeigt, weist die Nut 208 eine sich in der Umfangsrichtung 608 verändernde Tiefe 400 auf.

## Patentansprüche

1. Verfahren zum Herstellen einer Schaltkulisse (106) für ein Schiebenockenstück (104) wobei eine Nut (208) zum Führen eines Zapfens eines Aktuators (112) für ein Verschieben des Schiebenockenstücks (104) erzeugt wird, Wobei die Nut durch Prägung in einem ebenen Blechzuschnitt (300) gebildet wird, wobei der ebene Blechzuschnitt (300) anschließend in einen Blechzylinder (600) mit ringförmigem Querschnitt (602) umgeformt wird und die dann gegenüberliegenden Enden (604) des Blechzuschnitts (300) nach dem Umformen miteinander über eine Schweißnaht (606) verbunden werden und die gebildete Schaltkulisse (106) mit einem Rohr (700) für Nockenpakete (108) verbunden wird, **dadurch gekennzeichnet, dass** der ebene Blechzuschnitt (300) mit wenigstens einer Tasche (302) an der Seite gebildet wird, welche der Seite gegenüberliegt, die die Nut (208) aufweist.

2. Verfahren nach Anspruch 1, **dadurch gekennzeichnet, dass** mehrere Taschen (302) vorgesehen sind, welche zu beiden Seiten der Nut (208) angeordnet sind.

## Claims

1. Method for producing a switch guide plate (106) for a sliding cam piece (104), a groove (208) being produced for guiding a pin of an actuator (112) for a displacement of the sliding cam piece (104), the groove being formed in a planar sheet metal blank (300) by way of stamping, the planar sheet metal blank (300) subsequently being reshaped into a sheet metal cylinder (600) with an annular cross section (602), and the ends (604) of the sheet metal blank (300) which then lie opposite one another being connected to one another via a welded seam (606) after the reshaping, and the switch guide plate (106) which is formed being connected to a tube (700) for cam packs (108), **characterized in that** the planar sheet metal blank (300) is formed with at least one pocket (302) on the side which lies opposite the side which has the groove (208).

2. Method according to Claim 1, **characterized in that** a plurality of pockets (302) are provided which are arranged on both sides of the groove (208).

## Revendications

1. Procédé de fabrication d'une coulisse de commutation (106) pour un élément de came coulissante (104), une rainure (208) étant produite pour guider un tourillon d'un actionneur (112) en vue du déplacement d'une pièce de came coulissante (104), la rainure étant formée par gaufrage dans une pièce en tôle découpée plane (300), la pièce en tôle découpée plane (300) étant ensuite mise en forme en un cylindre en tôle (600) de section transversale annulaire (602) et les extrémités opposées (604) de la pièce en tôle découpée (300) étant ensuite assemblées les unes aux autres après mise en forme par le biais d'un joint de soudure (606) et la coulisse de commutation formée (106) étant assemblée à un tube (700) pour des paquets de cames (108), **caractérisé en ce que** la pièce en tôle découpée plane (300) est formée avec au moins une cavité (302) sur le côté, laquelle est opposée au côté qui présente la rainure (208).

2. Procédé selon la revendication 1, **caractérisé en ce que** plusieurs cavités (302) sont prévues, lesquelles sont disposées des deux côtés de la rainure (208).
